# EUROPÄISCHE PATENTSCHRIFT

(11) **EP 4 075 396 B1**
(45) Veröffentlichungstag und Bekanntmachung des Hinweises auf die Patenterteilung: **18.02.2026**
(21) Anmeldenummer: 22167735.4
(22) Anmeldetag: 12.04.2022
(51) Int. Cl.: G06V 20/64, G06V 40/16

(54) **VERFAHREN UND ANORDNUNG ZUR OPTISCHEN ERFASSUNG EINES KOPFES EINER PERSON**
METHOD AND ASSEMBLY FOR OPTICALLY DETECTING A HEAD OF A PERSON
PROCÉDÉ ET AGENCEMENT DE DÉTECTION OPTIQUE DE LA TÊTE D'UNE PERSONNE

(30) Priorität: 13.04.2021 DE 102021109140
(43) Veröffentlichungstag der Anmeldung: 19.10.2022
(73) Patentinhaber: Bundesdruckerei GmbH, 10969 Berlin (DE)
(72) Erfinder: WOLF, Andreas, 13158 Berlin (DE); GRIESER, Ralf, 10589 Berlin (DE); PETERS, Florian, 10437 Berlin (DE); TSCHORN, Stefan, 16775 Gransee (DE)
(74) Vertreter: Hentrich Patent- & Rechtsanwaltspartnerschaft mbB

(56) Entgegenhaltungen:
- US-A1- 2015 055 085
- YUPING LIN ET AL: "Accurate 3D face reconstruction from weakly calibrated wide baseline images with profile contours", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 June 2010 (2010-06-13), pages 1490 - 1497, XP031725623, ISBN: 978-1-4244-6984-0

## Beschreibung

Die Erfindung betrifft ein Verfahren zur optischen Erfassung eines Kopfes einer Person insbesondere bei einer Zugangskontrollstation oder insbesondere bei Erstellung von Referenzdaten für ein Identitätsdokument und eine entsprechende Anordnung zur Durchführung des Verfahrens.

Derartige Verfahren und Anordnungen werden beispielsweise genutzt, um dreidimensionale Modelle oder um dreidimensionale Daten des Kopfes einer Person zu erstellen, die als Referenzdaten in einem Identitätsdokument hinterlegt werden können oder aber die zum Abgleich mit bereits hinterlegten Referenzdaten dienen können, beispielsweise in einer Zugangskontrolle, insbesondere einer automatisierten Zugangskontrolle. Häufig dient für den Abgleich dabei das Portraitbild, welches auf das Ausweis- oder das Personaldokument aufgedruckt ist. Dieses zweidimensionale Portraitbild könnte jedoch gefälscht werden, sodass ein Abgleich mit weiteren Daten sinnvoll und zweckmäßig erscheint. Moderne Gesichtserkennungssysteme werden in der Zukunft auch von dreidimensionalen Modellen (3D-Modellen) als Referenzdaten für Gesichtserkennungssysteme Gebrauch machen. Damit das gelingt, ist die Erfassung qualitativ hochwertiger Referenzdaten erforderlich. Zum Erfassen der 3D-Modelle werden in vielen Fällen Mehrkamerasysteme benutzt. Auf diese Weise wird der vordere Kopf gleichzeitig aus verschiedenen definierten Blickwinkeln betrachtet. Da die Positionen und Blickrichtungen der einzelnen Kameras bekannt sind, kann für jeden Punkt des Gesichtes, dessen Ort im 3D-Modell bestimmt werden. Diese können dann mit hinterlegten Referenzdaten verglichen werden. Eine vergrößerte Kamerazahl geht in der Regel mit einer verbesserten Genauigkeit der Positionsbestimmung der einzelnen Gesichtspunkte einher. Außerdem erlaubt die Verwendung mehrerer Kameras, mögliche Verdeckungen in vielen Fällen zu kompensieren. Nachteilig ist hierbei allerdings der hohe apparative Aufwand, und der hohe Aufwand bei der Bildbearbeitung.

Darüber hinaus ist häufig bei Zugangskontrollen (etwa zur Gewährleistung der Abwärtskompatibilität mit vorhandenen Lösungen) neben dem 3D-Modell als Referenzdatum die Speicherung eines zweidimensionalen Bildes erforderlich. Dieses wird mittels einer Projektion aus dem 3D-Modell erzeugt. Dabei gilt, dass je weniger Bildinformation das 3D-Modell hat und damit je geringer die Qualität, desto eher kommt es zu Fehlinformationen insbesondere am Rand des Gesichts, wie beispielsweise im Bereich der Haare oder der Ohren. Dies äußert sich in Fehlpixeln oder auch "ausgefransten" Ohren bzw. Haaren.

In der US 2015 / 055 085 A1 werden ein System und ein Verfahren zur Erstellung von Brillen oder Brillengläsern beschrieben, bei dem das Gesicht eines Nutzers mit einer Kamera, beispielsweise eines Smartphones, erfasst wird. Hierbei kann der Benutzer Instruktionen zur Kopfbewegung erhalten, damit das System das Gesicht aus möglichst vielen Blickrichtungen erfassen kann um eine passende Brille zu generieren und virtuell aufzusetzen.

In Yuping Lin et Al: "Accurate 3D Face Reconstruction from Weakly Calibrated Wide Baseline Images with Profile Contours" Yuping Lin, Gérard Medioni, and Jongmoo Choi Computer Science Department, University of Southern California 3737 Watt Way, PHE 101, Los Angeles, CA, 90089 978-1-4244-6985-7/10/$26.00 ©2010 IEEE wird beschrieben, wie ein Kopf aus unterschiedlichen Richtungen optisch erfasst wird, und aus diesen erfassten Daten dann ein 3D-Modell des Kopfes erstellt werden kann.

Es ist daher die Aufgabe der vorliegenden Erfindung, ein Verfahren und eine Anordnung dahingehend zu verbessern, dass dreidimensionale Daten mit einer hohen Qualität erzeugt werden können, bei gleichzeitig geringem apparativem Aufwand.

Diese Aufgabe wird durch ein Verfahren mit den Merkmalen des Anspruchs 1 und durch eine Anordnung mit den Merkmalen des Anspruchs 8 gelöst. Vorteilhafte Ausgestaltungen mit zweckmäßigen Weiterbildungen der Erfindung sind in den abhängigen Ansprüchen angegeben.

Das Verfahren umfasst insbesondere die folgenden Schritte:
- Optisches Erfassen eines ersten Bildes des Kopfes der Person aus einer ersten Richtung - vorzugsweise frontal - und Erzeugung eines ersten zweidimensionalen Datensatzes aus dem ersten Bild,
- Verschieben eines optischen oder akustischen Reizes entlang einer Trajektorie zu einer ersten Haltestelle, wodurch die Person zu einer Kopfbewegung veranlasst wird, um den Reiz zur ersten Haltestelle zu folgen,
- optisches Erfassen wenigstens eines zweiten Bildes des Kopfes der Person aus einer zweiten Richtung mittels der Kamera oder mittels einer zweiten Kamera und Erzeugung eines zweiten zweidimensionalen Datensatzes aus dem zweiten Bild und
- Ermitteln einer Tiefeninformation und/oder eines dreidimensionalen Modells durch das Zusammenführen der Datensätze mittels einer Auswerteeinheit einer Prozessoreinheit.

Mittels des optischen oder akustischen Reizes, der sich entlang einer Trajektorie zu einer ersten Haltestelle verschiebt, kann sichergestellt werden, dass der Kopf der Person in einer definierten Weise bewegt wird und aus einem gewünschten Winkel erfasst werden kann. Dies ermöglicht eine verbesserte Benutzerführung und stellt sicher, dass der Kopf der Person aus möglichst vielen Richtungen oder Winkeln optisch erfasst werden kann. Mittels des Reizes wird der Person auf einfache Art und Weise - unmissverständlich - deutlich, welche Haltung sie einnehmen muss, so dass ein vollständiges hochqualitatives dreidimensionales Modell des Kopfes erstellt werden kann oder aber eine auch im Randbereich des Gesichts vollständige Tiefeninformation erlangt werden kann. Gleichzeitig ermöglicht der Reiz, dass das Verfahren mit einer vereinfachten Anordnung durchgeführt werden kann. So reicht für die Durchführung des Verfahrens eine einzige Kamera aus. Der akustische Reiz kann dabei beispielsweise mit Hilfe von Lautsprechern ausgeübt werden, während der optische Reiz mittels einem Anzeigeelement, wie beispielsweise einem Bildschirm ausgegeben werden kann, oder durch eine Mehrzahl von Lichtquellen, insbesondere LEDs.

Wird das Verfahren im Rahmen einer Zugangskontrolle eingesetzt, so hat es sich als vorteilhaft erwiesen, wenn im Anschluss an das Zusammenführen der Datensätze, diese und die Tiefeninformation oder das dreidimensionale Modell mit auf oder in einem Identitätsdokument enthaltenen oder gespeicherten Referenzwerten abgeglichen wird. Weichen die zusammengeführten Datensätze und die Tiefeninformation oder das dreidimensionale Modell mit dem auf oder in dem Identitätsdokument enthaltenen oder gespeicherten Referenzwerten um einen vorgegebenen Schwellwert ab, so wird der Zugang verweigert. Entsprechend wird der Zugang gewährt, wenn die zusammengeführten Datensätze und die Tiefeninformation oder das dreidimensionale Modell mit dem auf oder in dem Identitätsdokument enthaltenen oder gespeicherten Referenzwerten übereinstimmen oder oberhalb eines vorgegebenen Schwellwerts miteinander übereinstimmen. Weiterhin ist es von Vorteil, wenn die zusammengeführten Datensätze und/oder die Tiefeninformation als weitere (neue) Referenzdaten in einem Speicher der Zugangskontrollstation hinterlegt werden. Dies ermöglicht Änderungen in den Referenzdaten, also im Aussehen, einer Person zu erfassen, um bei einer in der Zukunft erfolgenden Zugangskontrolle den Abgleich der dann zusammengeführten Daten und der Tiefeninformation oder des dann erstellten dreidimensionalen Modells mit den weiteren (neuen) Referenzdaten abzugleichen, um den Zugang bei zumindest teilweiser Übereinstimmung zu gewähren oder bei Abweichung um einen vorgegebenen Schwellwert zu verweigern.

Wird das Verfahren im Rahmen einer Erstellung von Referenzdaten für ein Identitätsdokument angewendet, so hat es sich als vorteilhaft erwiesen, wenn die zusammengeführten Datensätze und die Tiefeninformation oder das dreidimensionale Modell in oder auf dem Identitätsdokument hinterlegt und/oder gespeichert wird, beispielsweise als ein biometrisches dreidimensionales Bild des Kopfes der Person. Das Identitätsdokument kann dann im Rahmen einer Zugangskontrolle mittels eines Lesegeräts eingelesen werden für einen Abgleich mit den im Rahmen der Zugangskontrolle zusammengeführten Datensätzen und der Tiefeninformation oder dem dreidimensionalen Modell.

Weiterhin ist es insbesondere bevorzugt, wenn entlang der Trajektorie mehrere Haltestellen vorhanden sind, dass der optische oder akustische Reiz sich entlang der Trajektorie von einer der Haltestellen zu einer nächsten der Haltestellen weiter verschiebt und dadurch die Person zu einer dem Reiz bis zur nächsten Haltestelle folgenden Kopfbewegung veranlasst wird, und dass bei jeder der Haltestellen ein weiteres Bild von dem Kopf der zu überprüfenden Person mittels der Kamera oder einer zweiten Kamera optisch erfasst und so ein weiterer zweidimensionaler Datensatz aus dem weiteren Bild erzeugt wird. Dies ermöglicht die optische Erfassung, insbesondere des Randbereichs des Gesichts, wie dem Kinn, dem Hals, die Ohren oder die Haare.

Damit die Person dem optischen oder akustischen Reiz unmissverständlich folgen kann, ist es bevorzugt, wenn der optische oder der akustische Reiz sich entlang der Trajektorie kontinuierlich verschiebt. In einer alternativen Ausführungsform kann der optische oder der akustische Reiz sich auch diskontinuierlich entlang der Trajektorie verschieben, d. h. der Reiz kann springen. So können beispielsweise Lautsprecher, Bildschirme, Anzeigenelemente oder Lichtquellen an verschiedenen Orten beabstandet voneinander angeordnet sein und unabhängig voneinander aktiviert oder deaktiviert werden.

In einer besonders einfachen Ausführungsform ist die Trajektorie durch eine lineare Anordnung von Lichtquellen oder Pixel gebildet, die in einer vorgegebenen Reihenfolge aktiviert und/oder deaktiviert werden. Die Trajektorie kann folglich als ein Band, insbesondere als ein LED-Band oder als eine Lichtschlange gebildet sein.

In einer alternativen Ausführungsform kann die Trajektorie als eine Fläche mit einer Mehrzahl von Lichtquellen oder Pixel aufweisenden Bereichen gebildet sein, wobei die Bereiche unabhängig voneinander aktiviert und/oder deaktiviert werden. So kann zur Veranlassung der Kopfbewegung ein erster Bereich aktiviert werden, während die übrigen Bereiche deaktiviert bleiben, oder ein erster Bereich deaktiviert werden, während die übrigen Bereiche aktiviert bleiben. Alternativ können auch mehrere, vorzugsweise benachbarte Bereiche aktiviert, während die übrigen Bereiche deaktiviert sind. Die Bereiche können sich dabei in ihrer emittierten Intensität oder in ihrem Emissionsspektrum unterscheiden, d.h. die Bereiche können im aktivierten Zustand mit einer höheren Intensität emittieren, als im deaktivierten Zustand, und umgekehrt. Die Bereiche können in einer beliebigen zweidimensionalen Anordnung angebracht sein, nicht nur entlang einer gedachten geraden Führungslinie. Damit kann der Benutzer angeregt werden, den Kopf etwa im Kreis zu bewegen.

Um die Qualität der Datensätze und/oder des dreidimensionalen Modells zu überprüfen, ist es bevorzugt, wenn im Anschluss an das Zusammenführen mittels der Auswerteeinheit die folgenden weiteren Schritte durchgeführt werden:
- Untersuchen der Bilder auf Fehlpixel und/oder auf fehlende Bildinformation,
- Verschieben des optischen oder akustischen Reizes entlang der Trajektorie zu einer weiteren Haltestelle oder zurück an eine vorherige der Haltestellen, wodurch die Person zu einer Kopfbewegung veranlasst wird, um den Reiz zur weiteren Haltestelle oder zu der vorherigen Haltestelle zu folgen,
- Optisches Erfassen wenigstens eines weiteren Bildes mittels der Kamera oder einer zweiten Kamera und Erzeugen eines weiteren zweidimensionalen Datensatzes aus dem weiteren Bild,
- Detektieren der fehlenden Bildinformation und/oder von Fehlpixeln aus dem weiteren Datensatz, und
- Ausgleichen der detektierten Fehlinformation und/oder der Fehlpixel in den Bildern.

Dies ermöglicht Fehlpixel und/oder fehlende Bildinformationen, die beispielsweise durch Verdeckungen oder durch eine Brille entstehen, zu detektieren und durch Bildinformation aus weiteren Bildern/Datensätzen auszugleichen.

Insbesondere ist es bevorzugt, wenn das Verfahren die folgenden Schritte umfasst:
- Lokalisation von fehlenden Bildinformationen und/oder von Fehlpixeln in den erfassten Bildern,
- Ermittlung einer einzunehmenden Haltung des Kopfes, in welcher die fehlenden Bildinformationen und/oder die Fehlpixel von der Kamera optisch erfassbar sind,
- Ermitteln derjenigen Haltestelle entlang der Trajektorie für den Reiz, durch welche die Person veranlasst wird, diejenige Haltung einzunehmen, in der die fehlenden Bildinformationen und/oder die Fehlpixel optisch erfassbar sind, und
- Verschieben des optischen oder akustischen Reizes entlang der Trajektorie bis zu der ermittelten Haltestelle.

Durch die Lokalisation der fehlenden Bildinformation in den erfassten Bildern und durch die Ermittlung derjenigen Haltestelle entlang der Trajektorie, in der die fehlende Bildinformation und/oder die Fehlpixel optisch erfassbar wird, ist es möglich, die Person anzuleiten, den Kopf in genau diejenige Haltung zu positionieren, die die Fehlpixel oder die Fehlinformation enthalten, um ein vollständiges 3D-Modell oder eine vollständige Tiefeninformation zu erhalten. In anderen Worten wird durch die Lokalisation der fehlenden Bildinformation und/oder der Fehlpixel die Haltung des Kopfes vorausberechnet, die eingenommen werden muss, um die fehlende Information zu erhalten.

Erfindungsgemäß ist vorgesehen, dass aus den Bildern und den Datensätzen und der daraus gewonnenen Tiefeninformation ein dreidimensionales Modell des Kopfes der Person erstellt wird und wenn mittels des dreidimensionalen Modells mittels Projektion ein zweidimensionales Bild erzeugt und in einem Speicher hinterlegt wird. Das so erhaltene zweidimensionale Bild weist dabei auch in den Randbereichen eine hohe Qualität und eine hohe Auflösung auf.

Die Anordnung zur Durchführung des Verfahrens weist eine erste Kamera und eine Prozessoreinheit auf, die ausgebildet ist, mit der Kamera über eine Kommunikationsverbindung zu kommunizieren, wobei die Prozessoreinheit eine Auswerteeinheit aufweist, welche ausgebildet ist, Daten, die mittels der ersten Kamera von der Person erfasst werden, weiterzuverarbeiten. Die erste Kamera ist eingerichtet, ein erstes Bild des Kopfes der Person aus einer ersten Richtung - vorzugsweise frontal - optisch zu erfassen, womit die Prozessoreinheit einen ersten zweidimensionalen Datensatz aus dem ersten Bild erzeugt, wobei ein Attraktor vorhanden ist, der eingerichtet ist einen optischen oder akustischen Reiz entlang einer Trajektorie zu einer ersten Haltestelle zu verschieben, wodurch die Person zu einer Kopfbewegung veranlasst wird, um dem Reiz zur ersten Haltestelle zu folgen, wobei ein zweites Bild des Kopfes der Person aus einer zweiten Richtung mittels der ersten Kamera erfassbar ist, womit die Prozessoreinheit einen zweiten zweidimensionalen Datensatz aus dem zweiten Bild erzeugt, um die Datensätze zur Ermittlung einer Tiefeninformation oder eines dreidimensionalen Modells mittels der Auswerteeinheit zusammenzuführen.

Die Vorrichtung kann Teil einer Zutrittskontrollstation sein, wobei die Auswerteeinheit ausgebildet ist, Daten die mittels der der Zutrittskontrollstation zugeordneten ersten Kamera von der zu überprüfenden Person erfasst werden, weiterzuverarbeiten und anschließend ein sich daraus ergebendes Bearbeitungsergebnis an eine Ausgabeeinheit zu übermitteln. Zudem ist eine Leseeinheit zum Auslesen eines Identitätsdokuments vorhanden, womit die Auswerteeinheit eingerichtet ist, die Datensätze sowie die Tiefeninformation oder das dreidimensionale Modell mit, auf oder in dem Identitätsdokument enthaltenen oder gespeicherten Referenzwerten zu vergleichen.

Die erfindungsgemäße Anordnung ist also derart ausgebildet, dass eine Verifikation - vorzugsweise an einer Zutrittskontrollstation - einer zu überprüfenden Person durchgeführt werden kann, wobei mit einer geringen Anzahl an Kameras ein dreidimensionales Modell oder ein dreidimensionaler Datensatz verarbeitet werden kann. Mittels des Attraktors ist eine einfache Benutzerführung möglich, sodass die dreidimensionale Information, also die Tiefeninformation aus möglichst vielen Richtungen erfasst werden kann. Die Vorrichtung kann somit sowohl der Erstellung eines dreidimensionalen Modells oder eines dreidimensionalen Datensatzes dienen, die in einem Identifizierungsdokument verwendet werden können, als auch zur Identifikation einer Person im Rahmen einer Zutrittskontrollstation.

In diesem Zusammenhang ist es bevorzugt, wenn der Attraktor als eine lineare Anordnung von Lichtquellen oder Pixel gebildet ist, wenn der Attraktor also beispielsweise ein LED Band oder eine wandernde Lichtschlange ist, dessen beleuchtete Zone sich langsam bewegt. Alternativ ist es auch möglich, dass der Attraktor kreuzförmig gebildet ist, mit kreuzförmig angeordneten Lichtquellen oder Pixel.

In einer weiteren alternativen und bevorzugten Ausführungsform ist es möglich, dass der Attraktor als eine Fläche mit einer Mehrzahl von Lichtquellen oder Pixel aufweisenden Bereichen gebildet ist, die mittels der Prozessoreinheit unabhängig voneinander aktivierbar oder deaktivierbar sind. Die verschiedenen Bereiche können sich dabei in ihrer emittierten Intensität oder in ihren Emissionsspektren unterscheiden. Beispielsweise emittiert ein Bereich nach Aktivierung mit einer höheren Intensität - also heller - als die deaktivierten Bereiche, und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durchseparierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer Anordnung zur optischen Erfassung einer zu überprüfenden Person,
- Fig. 2: eine schematische Darstellung einer Trajektorie mit einer Mehrzahl von Haltestellen
- Fig. 3: eine schematische Darstellung einer linearen Trajektorie mit kontinuierlichem Reiz
- Fig. 4: eine schematische Darstellung einer linearen Trajektorie mit Qualitätsüberprüfung und
- Fig. 5: eine schematische Darstellung einer flächenförmigen Trajektorie

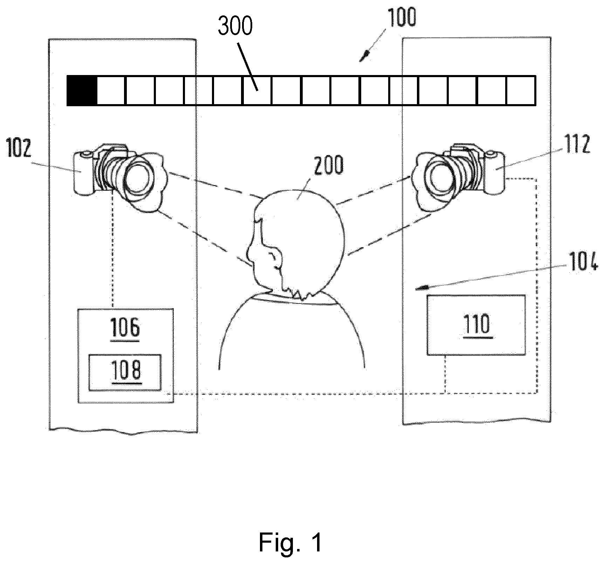

In Figur 1 ist eine Anordnung 100 zur optischen Erfassung eines Kopfes einer zu überprüfenden Person 200 an einer Zutrittskontrollstation 104 gezeigt. Die vorliegend exemplarisch gezeigte Zutrittskontrollstation 104 bzw. die Anordnung 100 umfassen eine erste Kamera 102 sowie eine optionale zweite Kamera 112, deren optische Achsen senkrecht zueinander ausgerichtet sind und senkrecht aufeinander stehen. Es sei angemerkt, dass der Einsatz der zweiten Kamera 112 zwar zweckmäßig, aber nicht zwingend notwendig ist, da der Kopf der zu überprüfenden Person 200 auch mehrfach durch die erste Kamera 102 erfasst werden könnte. Beide Kameras 102, 112 sind über eine punktiert dargestellte Kommunikationsverbindung mit einer Prozessoreinheit 106 verbunden, die ihrerseits eine Auswerteeinheit 108 aufweist, um diejenigen Daten, die mittels der Kamera 102, 112 von der zu überprüfenden Person 200 erfasst werden, weiter zu verarbeiten, damit sie anschließend in ein Verarbeitungsergebnis gegossen und nach Übermittlung an eine Ausgabeeinheit 110 von letzterer ausgegeben werden können.

Die erste Kamera 102 ist vorliegend eingerichtet, ein erstes Bild der zu überprüfenden Person 200 zu erfassen, wobei dieses erste Bild, vorzugsweise ein frontal ausgerichtetes Portraitbild, der zu überprüfenden Person 200 ist. Dadurch erzeugt die Prozessoreinheit 106 einen ersten zweidimensionalen Datensatz aus dem ersten Bild. Die Zutrittskontrollstation 104 bzw. die Anordnung 100 weist darüber hinaus einen Attraktor 300 auf, der eingerichtet ist, einen optischen oder akustischen Reiz entlang einer Trajektorie 301 zu einer ersten Haltestelle 303 zu verschieben, wodurch die Person 200 zu einer Kopfbewegung veranlasst wird, um dem Reiz zur ersten Haltestelle 303 zu folgen. Die erste Kamera 102 oder die zweite Kamera 112 sind eingerichtet ein zweites Bild des Kopfes der zu überprüfenden Person 200 aus einer zweiten Richtung - vorzugsweise aus einem Profil - zu erfassen. Die Prozessoreinheit 106 erzeugt einen zweiten zweidimensionalen Datensatz aus dem zweiten Bild, um im Anschluss die Datensätze zur Ermittlung einer Tiefeninformation oder zur Erzeugung eines dreidimensionalen Modells mittels der Auswerteeinheit 108 zusammenzuführen.

Der so neugewonnene Datensatz kann im Anschluss mit Informationen auf einem Identitätsdokument, insbesondere solchen, die auf einem Chip des Identitätsdokuments gespeichert sind, abgeglichen werden. Für den Abgleich umfasst die Anordnung 100 zusätzlich eine nicht näher gezeigte Leseeinheit zum Auslesen des Identitätsdokuments, womit die Auswerteeinheit 108 eingerichtet ist, die Datensätze sowie die Tiefeninformation oder das 3D-Modell mit auf oder in dem Identitätsdokument enthalten oder gespeicherten Referenzwerten zu vergleichen, um das Vergleichsergebnis an der Ausgabeeinheit 110 auszugeben und anschließend den Zutritt zu gewähren oder zu verbieten.

Um den Kopf der zu überprüfenden Person 200 aus möglichst vielen Blickwinkeln und Richtungen erfassen zu können, und um die Qualität der dreidimensionalen Information zu verbessern, weist der Attraktor 300 eine Trajektorie 301 mit mehreren Haltestellen 302 auf, sodass der optische oder akustische Reiz sich entlang der Trajektorie 301 von einer der Haltestellen 302 zu einer nächsten der Haltestellen 304 weiter verschiebt. Dies veranlasst die Person 200 zu einer dem Reiz bis zur nächsten Haltestelle 304 folgenden Kopfbewegung, wobei bei jeder der Haltestellen 302 ein weiteres Bild von dem Kopf der zu überprüfenden Person 200 mittels der ersten Kamera 102 oder der zweiten Kamera 112 optisch erfassbar ist und so ein weiterer zweidimensionaler Datensatz aus dem weiteren Bild erzeugt wird.

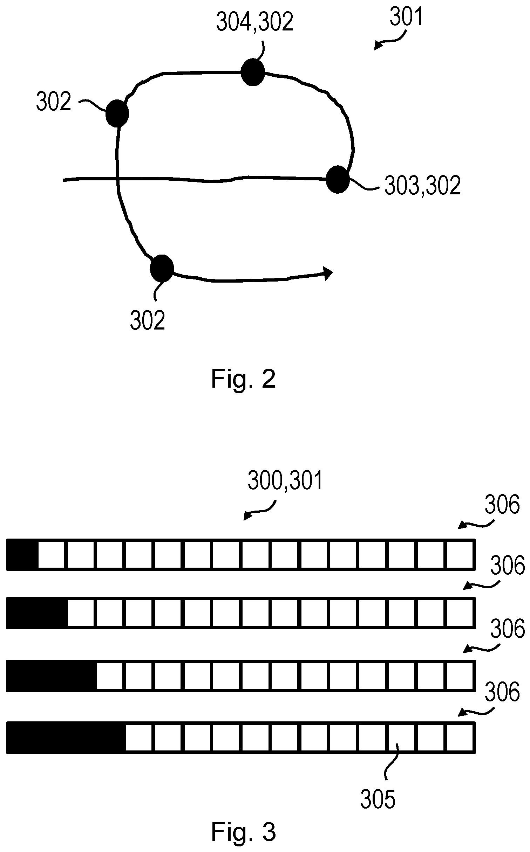

Fig. 3 zeigt exemplarisch einen Attraktor, der als lineare Anordnung 306 von Lichtquellen 305 oder Pixel gebildet ist. Beispielsweise kann der Attraktor 300 als ein LED-Band oder als eine Lichtschlange gebildet sein. In Figur 3 wird ein zeitlicher Verlauf des optischen Reizes entlang der Trajektorie 301 dargestellt. Der optische Reiz verschiebt sich dabei kontinuierlich entlang der Trajektorie 301, d.h. die Lichtquellen 305 werden entlang der Trajektorie 301 in einer vorgegebenen Reihenfolge, d.h. nacheinander, deaktiviert. Dabei wird unter Aktivieren, also Anstellen, die Emission der Lichtquelle 305 mit einer höheren Intensität verstanden, während bei einer Deaktivierung der Lichtquellen 305, diese gar nicht emittieren oder zumindest mit einer geringeren Intensität emittieren. Alternativ können die Lichtquellen 305 oder Pixel natürlich auch nacheinander von einem deaktivierten Zustand in einen aktivierten Zustand versetzt werden.

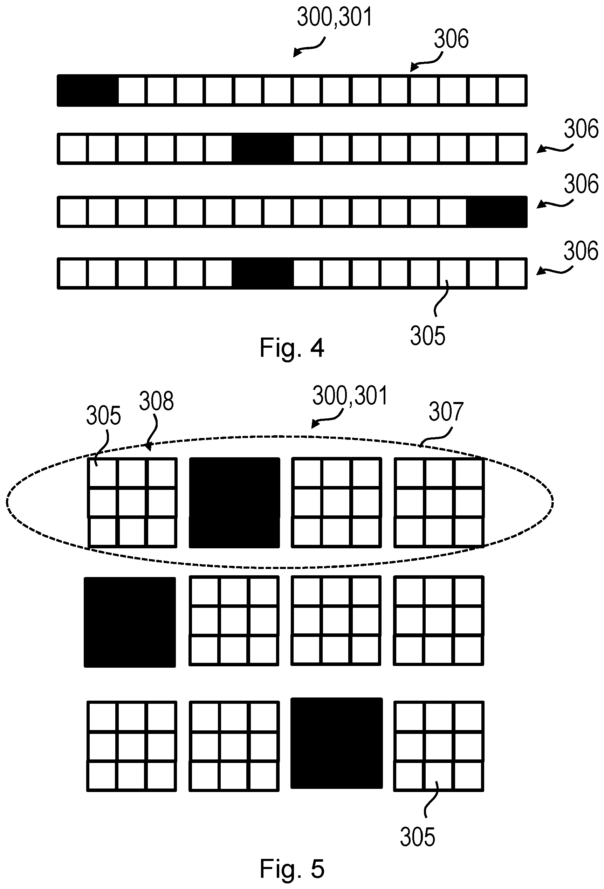

In der Figur 4 ist wiederum der Attraktor 300 als eine lineare Anordnung 306 dargestellt, wobei auch hier ein zeitlicher Verlauf des optischen Reizes wiedergegeben ist. Der Reiz springt vorliegend entlang der Trajektorie 301, das heißt der Verlauf ist diskontinuierlich. Dies ist insbesondere dann vorteilhaft, wenn das Verfahren beschleunigt ablaufen soll und wenn eine Qualitätskontrolle durchgeführt wird. Zur Qualitätskontrolle der erzeugten Tiefeninformation oder des erzeugten dreidimensionalen Modells, ist die Auswerteeinheit 108 eingerichtet die Bilder und/oder die Datensätze und/oder das dreidimensionale Modell auf Fehlpixel und/oder auf fehlende Bildinformationen zu untersuchen. Fehlende Bildinformation können beispielsweise auch Verdeckungen sein, wie sie durch Brillen oder Haare hervorgerufen werden. Bei Vorliegen von Fehlpixeln oder fehlender Bildinformation veranlasst die Prozessoreinheit 106 den Attraktor 300, den optischen oder akustischen Reiz entlang der Trajektorie 301 zu einer weiteren Haltestelle 302 oder zurück zu einer vorherigen Haltestelle 302 zu verschieben. Vorliegend wurde der optische Reiz zurück in eine vorherige Haltestelle 302 verschoben, wodurch die Person 200 zu einer dem Reiz folgenden Kopfbewegung veranlasst wird. Im Anschluss können weitere Bilder zur Erzeugung von weiteren zweidimensionalen Datensätzen optisch mittels der ersten Kamera 102 oder der zweiten Kamera 112 erfasst werden oder auch die optische Erfassung von Bildern aus einer bestimmten Richtung wiederholt werden. Aus den so erzeugten weiteren Datensätzen kann die fehlende Bildinformation und/oder die Fehlpixel detektiert und in der Tiefeninformation oder in dem dreidimensionalen Modell ausgeglichen werden.

Vorzugsweise wird die fehlende Bildinformation in den erfassten Bildern lokalisiert, wobei die Auswerteeinheit 108 eingerichtet ist, eine einzunehmende Haltung des Kopfes zu ermitteln, in welcher die fehlende Bildinformation und/oder die Fehlpixel von der Kamera 102 oder der zweiten Kamera 112 optisch erfassbar sind. Die Auswerteeinheit 108 ermittelt zudem diejenige der Haltestellen 302 entlang der Trajektorie für den Reiz, durch welche die Person 200 veranlasst wird, diejenige Haltung einzunehmen, in der die fehlende Bildinformation und/oder die Fehlpixel optisch erfassbar sind. Im Anschluss wird der optische oder akustische Reiz entlang der Trajektorie 301 bis zur ermittelten Haltestelle 302 verschoben und weitere Bilder optisch erfasst.

Natürlich kann die Verschiebung des optischen oder akustischen Reizes 301 entlang der Trajektorie 301 im Rahmen der Qualitätskontrolle auch kontinuierlich erfolgen.

Die so erhaltene hochqualitative 3D-Tiefeninformation oder das 3D-Modell des Kopfes der Person kann im Anschluss durch Projektion in ein zweidimensionales Bild umgewandelt und in einem Speicher hinterlegt werden.

Figur 5 zeigt eine weitere Ausführungsform des Attraktors 300, der in diesem Fall als eine Fläche 307 gebildet ist, mit einer Mehrzahl von Lichtquellen 305 aufweisenden Bereichen 308. Die Bereiche 308 können unabhängig voneinander aktiviert und/oder deaktiviert werden, können also von hell auf dunkel oder von höherer Intensität auf niedrigere Intensität geschaltet werden.

### BEZUGSZEICHENLISTE

- 100: Anordnung
- 102: erste Kamera
- 104: Zutrittskontrollstation
- 106: Prozessoreinheit
- 108: Auswerteeinheit
- 110: Ausgabeeinheit
- 112: zweite Kamera
- 200: zu überprüfende Person
- 300: Attraktor
- 301: Trajektorie
- 302: Haltestelle
- 303: erste Haltestelle
- 304: nächste Haltestelle
- 305: Lichtquelle
- 306: lineare Anordnung
- 307: Fläche
- 308: Bereiche

## Patentansprüche

1. Verfahren zur optischen Erfassung eines Kopfes einer Person (200) im Rahmen einer Zugangskontrolle oder für die Erstellung von Referenzdaten für ein Identitätsdokument, umfassend die folgenden Schritte:
- Optisches Erfassen eines ersten Bildes des Kopfes der Person (200) aus einer ersten Richtung mittels einer Kamera (102) und Erzeugung eines ersten zweidimensionalen Datensatzes aus dem ersten Bild,
- Verschieben eines optischen oder akustischen Reizes entlang einer Trajektorie (301) zu einer ersten Haltestelle (303), wodurch die Person (200) zu einer Kopfbewegung veranlasst wird, um dem Reiz zur ersten Haltestelle (303) zu folgen,
- Optisches Erfassen wenigstens eines zweiten Bildes des Kopfes der Person (200) aus einer zweiten Richtung mittels der Kamera (102) oder mittels einer zweiten Kamera (112) und Erzeugung eines zweiten zweidimensionalen Datensatzes aus dem zweiten Bild, und
- Ermitteln eines dreidimensionalen Modells des Kopfes der Person durch das Zusammenführen des ersten zweidimensionalen Datensatzes und des zweiten zweidimensionalen Datensatzes mittels einer Auswerteeinheit (108) einer Prozessoreinheit (106) anhand vorbekannter Blickrichtung und Position der Kamera (102) oder der Kameras (102; 112),
wobei mittels des dreidimensionalen Modells des Kopfes der Person mittels Projektion ein zweidimensionales Bild erzeugt und in einem Speicher hinterlegt wird.

2. Verfahren nach Anspruch 1, **dadurch gekennzeichnet, dass** entlang der Trajektorie (301) mehrere Haltestellen (302) vorhanden sind, dass der optische oder akustische Reiz sich entlang der Trajektorie (301) von einer der Haltestellen (302) zu einer nächsten der Haltestellen (304) weiterverschiebt, und dadurch die Person (200) zu einer dem Reiz bis zur nächsten Haltestelle (304) folgenden Kopfbewegung veranlasst wird, und dass bei jeder der Haltestellen (302) ein weiteres Bild von dem Kopf der zu überprüfenden Person (300) mittels der Kamera (102) oder einer zweiten Kamera (112) optisch erfasst und so ein weiterer zweidimensionaler Datensatz aus dem weiteren Bild erzeugt wird.

3. Verfahren nach Anspruch 1 oder 2, **dadurch gekennzeichnet, dass** der optische oder der akustische Reiz sich entlang der Trajektorie (301) kontinuierlich verschiebt.

4. Verfahren nach einem der Ansprüche 1 bis 3, **dadurch gekennzeichnet, dass** die Trajektorie (301) durch eine lineare Anordnung (306) von Lichtquellen (305) oder Pixel gebildet ist, die in einer vorgegebenen Reihenfolge aktiviert und/oder deaktiviert werden.

5. Verfahren nach einem der Ansprüche 1 bis 3, **dadurch gekennzeichnet, dass** die Trajektorie (301) als eine Fläche (307) mit einer Mehrzahl von Lichtquellen (305) oder Pixel aufweisenden Bereichen (308) gebildet ist, dass die Bereiche (308) unabhängig voneinander aktiviert und/oder deaktiviert werden.

6. Verfahren nach einem der Ansprüche 1 bis 5, **dadurch gekennzeichnet, dass** im Anschluss an das Zusammenführen mittels der Auswerteeinheit (108) die folgenden weiteren Schritte durchgeführt werden:
- Untersuchen der Bilder auf Fehlpixel und/oder auf fehlende Bildinformation,
- Verschieben des optischen oder akustischen Reizes entlang der Trajektorie (301) zu einer weiteren Haltestelle (302) oder zurück an eine vorherige der Haltestellen (302), wodurch die Person (200) zu einer Kopfbewegung veranlasst wird, um den Reiz zur weiteren Haltestelle (302) oder zu der vorherigen Haltestelle (302) zu folgen,
- Optisches Erfassen wenigstens eines weiteren Bildes mittels der Kamera (102) oder mittels einer zweiten Kamera (112) und Erzeugen eines weiteren zweidimensionalen Datensatzes aus dem weiteren Bild,
- Detektieren der fehlenden Bildinformation und/oder von Fehlpixeln aus dem weiteren Datensatz, und
- Ausgleichen der detektierten Fehlinformation und/oder der Fehlpixel in den Bildern.

7. Verfahren nach einem der Ansprüche 1 bis 6, **gekennzeichnet durch** die folgenden Schritte:
- Lokalisation von fehlenden Bildinformationen und/oder von Fehlpixeln in den erfassten Bildern,
- Ermittlung einer einzunehmenden Haltung des Kopfes, in welcher die fehlenden Bildinformationen und/oder die Fehlpixel von der Kamera (102) oder einer zweiten Kamera (112) optisch erfassbar sind,
- Ermitteln derjenigen Haltestelle (302) entlang der Trajektorie (301) für den Reiz, durch welche die Person (200) veranlasst wird, diejenige Haltung einzunehmen, in der die fehlenden Bildinformationen und/oder die Fehlpixel optisch erfassbar sind, und
- Verschieben des optischen oder akustischen Reizes entlang der Trajektorie (301) bis zu der ermittelten Haltestelle (302).

8. Anordnung (100) zur Durchführung des Verfahrens nach einem der Ansprüche 1 bis 7, mit einer ersten Kamera (102) und mit einer Prozessoreinheit (106), die ausgebildet ist, mit der Kamera (102) über eine Kommunikationsverbindung zu kommunizieren, wobei die Prozessoreinheit (106) eine Auswerteeinheit (108) aufweist, welche ausgebildet ist, Daten, die mittels der ersten Kamera (102) von der zu überprüfenden Person (200) erfasst werden, weiterzuverarbeiten, wobei die erste Kamera (102) eingerichtet ist, ein erstes Bild (114) des Kopfes der Person (200) aus einer ersten Richtung optisch zu erfassen, womit die Prozessoreinheit (106) einen ersten zweidimensionalen Datensatz aus dem ersten Bild (114) erzeugt, wobei ein Attraktor (300) vorhanden ist, der eingerichtet ist einen optischen oder akustischen Reiz entlang einer Trajektorie (301) zu einer ersten Haltestelle (303) zu verschieben, wodurch die Person (200) zu einer Kopfbewegung veranlasst wird, um dem Reiz zur ersten Haltestelle (303) zu folgen, wobei ein zweites Bild (116) des Kopfes der zu Person (200) aus einer zweiten Richtung mittels der ersten Kamera (102) erfassbar ist, womit die Prozessoreinheit (106) einen zweiten zweidimensionalen Datensatz aus dem zweiten Bild (116) erzeugt, um den ersten zweidimensionalen Datensatz und den zweiten zweidimensionalen Datensatz zur Ermittlung eines dreidimensionalen Modells mittels der Auswerteeinheit (108) zusammenzuführen, wobei mittels des dreidimensionalen Modells des Kopfes der Person mittels Projektion ein zweidimensionales Bild erzeugt und in einem Speicher hinterlegt wird.

9. Anordnung (100) nach Anspruch 8, **dadurch gekennzeichnet, dass** der Attraktor (300) als eine lineare Anordnung (306) von Lichtquellen (305) oder Pixel gebildet ist.

10. Anordnung (100) nach Anspruch 8, **dadurch gekennzeichnet, dass** der Attraktor (300) als eine Fläche (307) mit einer Mehrzahl von Lichtquellen (305) oder Pixel aufweisenden Bereichen (308) gebildet ist, die mittels der Prozessoreinheit (106) unabhängig voneinander aktivierbar oder deaktivierbar sind.

## Claims

1. A method for optically capturing a persons' head (200) as part of access control or for creating reference data for an identity document, comprising the following steps:
- optically capturing a first image of the persons' head (200) from a first direction using a camera (102) and generating a first two-dimensional data set from the first image,
- moving an optical or acoustic stimulus along a trajectory (301) to a first stop (303), thereby causing the person (200) to move their head to follow the stimulus to the first stop (303),
- optically capturing at least a second image of the persons' head (200) from a second direction using the camera (102) or using a second camera (112) and generating a second two-dimensional data set from the second image, and
- determining a three-dimensional model of the persons' head by merging the first two-dimensional data set and the second two-dimensional data set by means of an evaluation unit (108) of a processor unit (106) based on the previously known viewing direction and position of the camera (102) or cameras (102; 112),
wherein a two-dimensional image is generated by means of projection using the three-dimensional model of the persons' head and stored in a memory.

2. The method according to claim 1, **characterized in that** there are several stops (302) along the trajectory (301), that the optical or acoustic stimulus moves along the trajectory (301) from one of the stops (302) to the next of the stops (304), causing the person (200) to a movement of the head in order to follow the stimulus to a next of the stops (304), and that at each of the stops (302), another image of the head of the person being examined (300) is optically captured by means of the camera (102) or a second camera (112), thereby generating a further two-dimensional data set from the further image.

3. The method according to claim 1 or 2, **characterized in that** the optical or acoustic stimulus moves continuously along the trajectory (301).

4. The method according to any one of claims 1 to 3, **characterized in that** the trajectory (301) is formed by a linear arrangement (306) of light sources (305) or pixels, which are activated and/or deactivated in a predetermined sequence.

5. The method according to any one of claims 1 to 3, **characterized in that** the trajectory (301) is formed as a surface (307) with a plurality of areas (308) comprising light sources (305) or pixels, and **in that** the areas (308) are activated and/or deactivated independently of one another.

6. The method according to any one of claims 1 to 5, **characterized in that**, following the merging by means of the evaluation unit (108), the following further steps are carried out:
- examining the images for defective pixels and/or missing image information,
- moving the optical or acoustic stimulus along the trajectory (301) to another stop (302) or back to a previous one of the stops (302), thereby causing the person (200) to move their head to follow the stimulus to the further stop (302) or to the previous stop (302),
- optically capturing at least one further image using the camera (102) or using a second camera (112) and generating a further two-dimensional data set from the further image,
- detecting the missing image information and/or missing pixels from the further data set, and
- compensating for the detected missing information and/or missing pixels in the images.

7. The method according to any one of claims 1 to 6, **characterized by** the following steps:
- localizing missing image information and/or defective pixels in the captured images,
- determining a position to be assumed by the head in which the missing image information and/or the defective pixels can be optically captured by the camera (102) or a second camera (112),
- determining the stop (302) along the trajectory (301) for the stimulus at which the person (200) is prompted to adopt the position in which the missing image information and/or the defective pixels can be optically captured, and
- moving the optical or acoustic stimulus along the trajectory (301) to the determined stop (302).

8. An arrangement (100) for carrying out the method according to any one of claims 1 to 7, with a first camera (102) and with a processor unit (106) which is designed to communicate with the camera (102) via a communication link, wherein the processor unit (106) has an evaluation unit (108) which is designed to further process data captured by the first camera (102) from the person (200) to be checked, wherein the first camera (102) is designed to optically capture a first image (114) of the head of the person (200) from a first direction, whereby the processor unit (106) generates a first two-dimensional data set from the first image (114), wherein an attractor (300) is provided which is arranged to move an optical or acoustic stimulus along a trajectory (301) to a first stop (303), causing the person (200) to a movement of the head in order to follow the stimulus to the first stop (303), wherein a second image (116) of the head of the person (200) can be captured from a second direction by means of the first camera (102), whereby the processor unit (106) generates a second two-dimensional data set from the second image (116) in order to combine the first two-dimensional data set and the second two-dimensional data set to determine a three-dimensional model by means of the evaluation unit (108), wherein a two-dimensional image is generated by means of the three-dimensional model of the persons' head by means of projection and stored in a memory.

9. The arrangement (100) according to claim 8, **characterized in that** the attractor (300) is formed as a linear arrangement (306) of light sources (305) or pixels.

10. The arrangement (100) according to claim 8, **characterized in that** the attractor (300) is formed as a surface (307) with a plurality of areas (308) comprising light sources (305) or pixels, which can be activated or deactivated independently of one another by means of the processor unit (106).

## Revendications

1. Procédé de détection optique d'une tête d'une personne (200) dans le cadre d'un contrôle d'accès ou pour l'établissement de données de référence pour un document d'identité, comprenant les étapes suivantes:
- la détection optique d'une première image de la tête de la personne (200) à partir d'une première direction au moyen d'une caméra (102) et la génération d'un premier jeu de données en deux dimensions à partir de la première image,
- le déplacement d'un stimulus optique ou acoustique le long d'une trajectoire (301) vers un premier point d'arrêt (303), selon lequel la personne (200) est incitée à un mouvement de tête afin de suivre le stimulus vers le premier point d'arrêt (303),
- la détection optique au moins d'une seconde image de la tête de la personne (200) à partir d'une seconde direction au moyen de la caméra (102) ou au moyen d'une seconde caméra (112) et la génération d'un second jeu de données en deux dimensions à partir de la seconde image, et
- la détermination d'un modèle en trois dimensions de la tête de la personne par la réunion du premier jeu de données en deux dimensions et du second jeu de données en deux dimensions au moyen d'une unité d'évaluation (108) d'une unité centrale (106) à l'aide de la direction de vision et de la position préconnues de la caméra (102) ou des caméras (102 ; 112),
dans lequel une image en deux dimensions est générée au moyen du modèle en trois dimensions de la tête de la personne par projection et est enregistrée dans une mémoire.

2. Procédé selon la revendication 1, **caractérisé en ce que** le long de la trajectoire (301), plusieurs points d'arrêt (302) sont présents, **en ce que** le stimulus optique ou acoustique se déplace encore le long de la trajectoire (301) d'un des points d'arrêt (302) vers un suivant des points d'arrêt (304), et **en ce que** la personne (200) est incitée à un mouvement de tête suivant le stimulus jusqu'au point d'arrêt (304) suivant, et **en ce que** pour chacun des points d'arrêt (302), une autre image de la tête de la personne (300) à contrôler est détectée optiquement au moyen de la caméra (102) ou d'une seconde caméra (112) et ainsi un autre jeu de données en deux dimensions est généré à partir de l'autre image.

3. Procédé selon la revendication 1 ou 2, **caractérisé en ce que** le stimulus optique ou le stimulus acoustique se déplace en continu le long de la trajectoire (301).

4. Procédé selon l'une quelconque des revendications 1 à 3, **caractérisé en ce que** la trajectoire (301) est formée par un ensemble linéaire (306) de sources de lumière (305) ou de pixels qui sont activés et/ou désactivés dans un ordre prescrit.

5. Procédé selon l'une quelconque des revendications 1 à 3, **caractérisé en ce que** la trajectoire (301) est formée comme une surface (307) avec une pluralité de sources de lumière (305) ou de zones (308) présentant des pixels, **en ce que** les zones (308) sont activées et/ou désactivées indépendamment les unes des autres.

6. Procédé selon l'une quelconque des revendications 1 à 5, **caractérisé en ce qu'**à la suite de la réunion au moyen de l'unité d'évaluation (108), les autres étapes suivantes sont réalisées :
- l'examen des images quant aux pixels manquants et/ou aux informations d'image manquantes,
- le déplacement du stimulus optique ou acoustique le long de la trajectoire (301) vers un autre point d'arrêt (302) ou en retour vers un précédent des points d'arrêt (302), selon lequel la personne (200) est incitée à un mouvement de tête afin de suivre le stimulus vers l'autre point d'arrêt (302) ou le point d'arrêt (302) précédent,
- la détection optique au moins d'une autre image au moyen de la caméra (102) ou au moyen d'une seconde caméra (112) et la génération d'un autre jeu de données en deux dimensions à partir de l'autre image,
- la détection des informations d'image manquantes et/ou de pixels manquants à partir de l'autre jeu de données et
- la compensation des informations manquantes détectées et/ou des pixels manquants dans les images.

7. Procédé selon l'une quelconque des revendications 1 à 6, **caractérisé par** les étapes suivantes :
- la localisation d'informations d'image manquantes et/ou de pixels manquants dans les images détectées,
- la détermination d'une position de la tête à adopter, dans laquelle les informations d'image manquantes et/ou les pixels manquants peuvent être détectés optiquement par la caméra (102) ou une seconde caméra (112),
- la détermination du point d'arrêt (302) le long de la trajectoire (301) pour le stimulus, par lequel la personne (200) est incitée à adopter la position, dans laquelle les informations d'image manquantes et/ou les pixels manquants peuvent être détectés optiquement et
- le déplacement du stimulus optique ou acoustique le long de trajectoire (301) jusqu'au point d'arrêt (302) déterminé.

8. Ensemble (100) de réalisation du procédé selon l'une quelconque des revendications 1 à 7, avec une première caméra (102) et avec une unité centrale (106) qui est formée afin de communiquer avec la caméra (102) par le biais d'une liaison de communication, dans lequel l'unité centrale (106) présente une unité d'évaluation (108) qui est formée afin de retraiter des données qui sont détectées au moyen de la première caméra (102) par la personne (200) à contrôler, dans lequel la première caméra (102) est conçue afin de détecter optiquement une première image (114) de la tête de la personne (200) à partir d'une première direction, avec quoi l'unité centrale (106) génère un premier jeu de données en deux dimensions à partir de la première image (114), dans lequel un attracteur (300) est présent, lequel est conçu afin de déplacer un stimulus optique ou acoustique le long d'une trajectoire (301) vers un premier point d'arrêt (303), selon lequel la personne (200) est incitée à un mouvement de tête afin de suivre le stimulus vers le premier point d'arrêt (303), dans lequel une seconde image (116) de la tête de la personne (200) peut être détectée à partir d'une seconde direction au moyen de la première caméra (102), avec quoi l'unité centrale (106) génère un second jeu de données en deux dimensions à partir de la seconde image (116) afin de réunir le premier jeu de données en deux dimensions et le second jeu de données en deux dimensions pour la détermination d'un modèle en trois dimensions au moyen de l'unité d'évaluation (108), dans lequel une image en deux dimensions est générée au moyen du modèle en trois dimensions de la tête de la personne par projection et est enregistrée dans une mémoire.

9. Ensemble (100) selon la revendication 8, **caractérisé en ce que** l'attracteur (300) est formé comme un ensemble linéaire (306) de sources de lumière (305) ou de pixels.

10. Ensemble (100) selon la revendication 8, **caractérisé en ce que** l'attracteur (300) est formé comme une surface (307) avec une pluralité de sources de lumière (305) ou zones (308) présentant des pixels qui peuvent être activées ou désactivées au moyen de l'unité centrale (106) indépendamment les unes des autres.
